(19) Europäisches Patentamt
European Patent Office
Office européen des brevets

(11) EP 2 600 099 B1

## (12) EUROPÄISCHE PATENTSCHRIFT

(45) Veröffentlichungstag und Bekanntmachung des Hinweises auf die Patenterteilung:
**02.03.2016 Patentblatt 2016/09**

(21) Anmeldenummer: **12195005.9**

(22) Anmeldetag: **30.11.2012**

(51) Int Cl.:
*G01B 9/02* (2006.01)     *G02B 5/28* (2006.01)
*G02B 5/20* (2006.01)     *G02B 5/26* (2006.01)
*G02B 17/00* (2006.01)

(54) **Optisch korrigierende Mikrosonde zur Weißlicht-Interferometrie**

Optically corrective microprobe for white light interferometry

Microsonde à correction optique pour interférométrie en lumière blanche

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2011 DE 102011056002**

(43) Veröffentlichungstag der Anmeldung:
**05.06.2013 Patentblatt 2013/23**

(73) Patentinhaber: GRINTECH GmbH
07745 Jena (DE)

(72) Erfinder: **Messerschmidt, Dr. Bernhard**
07749 Jena (DE)

(74) Vertreter: **Freitag, Joachim et al**
**Patentanwälte**
**Oehmke & Kollegen**
**Neugasse 13**
**07743 Jena (DE)**

(56) Entgegenhaltungen:
WO-A1-02/082008          DE-A1-102010 022 421
US-A1- 2002 176 659      US-A1- 2005 174 664

• DEPIEREUX F ET AL: "FIBER-OPTIC SENSOR WITH MINIATURIZED PROBE HEAD AND NANOMTER ACCURACY BASED ON SPATIALLY MODULATED LOW-COHERENCE INTERFEROGRAM ANALYSIS", APPLIED OPTICS, OPTICAL SOCIETY OF AMERICA, WASHINGTON, DC; US, Bd. 46, Nr. 17, 10. Juni 2007 (2007-06-10) , Seiten 3425-3431, XP001542002, ISSN: 0003-6935, DOI: 10.1364/AO.46.003425

**Beschreibung**

Die Erfindung betrifft eine optisch korrigierende Mikrosonde zur Weißlicht-Interferometrie, ein Verfahren zur Herstellung des dazu verwendeten dispersionskorrigierenden Referenzstrahlteilers sowie eine damit ausgerüstete Anordnung zur Weißlichtinterferometrie.

Auf dem Gebiet der optischen Messtechnik existieren eine Vielzahl unterschiedlicher Auswertungsmethoden. Einen großen Bereich nimmt dabei die Interferometrie mit inkohärentem oder kurzkohärentem Licht im sichtbaren und nahen Infrarotbereich ein. Aufgrund des Spektrums des Lichts ist die Auflösung interferometrischer Messverfahren prinzipiell besser als $1\,\mu m$. Daraus ergibt sich eine besondere Eignung dieser Verfahren für die hoch genaue Messung von Längen beispielsweise bei der Schwingungsanalyse oder der Oberflächenprüfung von Werkstücken. Speziell die Interferometrie mit kurz kohärenten Licht oder Weißlicht, beispielsweise zur Rauheitsmessung oder zur Vermessung von Mikrostrukturen an präzisionsgefertigten Teilen, ist eine etablierte Technik.

Bei einem Großteil der auf dieser Technik basierender Messsysteme handelt es sich jedoch um große, relativ unflexible Geräte, die ausschließlich für die Durchführung einer Messaufgabe vorgesehen sind. Um auch kleine Hohlräume vermessen zu können ist es erforderlich, kleine oder sogar miniaturisierte Messsonden zu verwenden. Solche optischen Mikrosonden sind dann Bestandteil eines optischen Sensorsystems und können an die Objektoberfläche herangeführt werden. Dort erfassen sie mit hoher Präzision Abstandsänderungen zwischen der Mikrosonde und der Objektoberfläche.

Durch die Verwendung von kurzkohärenten Licht werden sehr hohe Anforderungen an die optischen Komponenten solcher Systeme gestellt. Um nicht die Interferenzfähigkeit des Lichtes zu verlieren dürfen kaum Dispersionsunterschiede zwischen Mess- und Referenzlichtbündel auftreten. Damit eine hohe Ortsauflösung bei gleichzeitiger Unempfindlichkeit gegenüber lokal geneigten Flächen in der zu vermessenden Objektoberfläche erreicht wird, ist es außerdem von Vorteil, wenn das Messlichtbündel unter einer möglichst hohen numerischen Apertur aus der Messsonde austritt und somit stark fokussiert auf die Objektoberfläche trifft.

Bei der optischen Mikrosondentechnik handelt es sich um ein Gebiet, dessen Potenzial bisher in der industriellen Fertigung kaum genutzt wird. Die Ursache hierfür liegt vor allem in der mangelnden Verfügbarkeit geeigneter, preiswerter Sensorsysteme, mit denen die Anforderungen hinsichtlich Miniaturisierung, Genauigkeit, Robustheit und Messgeschwindigkeit erfüllbar sind.

Eine einfache und flexible Variante wird in der Veröffentlichung APPLIED OPTICS, Vol. 46, No. 17 beschrieben. Hier wird die Kombination aus einem als Empfänger verwendeten "Michelson-Interferometer" und einer als "Fizeau-Interferometer" wirkenden, fasergekoppelten und selbst aus faseroptischen Komponenten bestehenden Mikrosonde beschrieben. Das "Fizeau-Interferometer" führt zu einer Aufteilung des zur Interferometrie verwendeten Lichtes in ein Mess- und in ein Referenzlichtbündel. Zur Strahlformung des Messlichtbündels auf die Objektoberfläche wird am Ausgang der Mikrosonde ein Abschnitt einer Gradientenindexfaser mit einer maximalen numerischen Apertur von NA = 0,11 angebracht. Die gewünschte Fokussierung wird in der Mikrosonde über die Länge des Gradientenindexfaser-Abschnitts eingestellt. Eine Verbesserung der Signalqualität wird hier durch die Verwendung von zwei, in unterschiedlichen Spektralbereichen emittierenden Lichtquellen erreicht, die eine genauere Auswertung des Interferogramms gestatten. Nachteilig bei dieser Lösung ist allerdings das nahezu kollimierte, parallele Messlichtbündel, das die Mikrosonde unerwünscht empfindlich gegenüber Neigungen und Unebenheiten der Objektoberfläche macht, da das in die Lichtleitfaser rückgekoppelte Messsignal durch eine mögliche Neigung der Objektoberfläche stark geschwächt wird. Das sondeninterne Referenzlichtbündel der "Fizeau-Sonde", das an der Lichtaustrittsfläche des Gradientenindexfaser-Abschnitts erzeugt wird, unterliegt jedoch keinen Dispersionseffekten bezüglich des eigentlichen Messsignals.

In der Patentschrift DE 10 2007 039 556 B3 wird ebenfalls eine faseroptische Mikrosonde beschrieben, bei der unter größeren numerischen Aperturen ($NA \geq 0,1$) durch individuell auf die Messaufgabe angepasste, optische Bauteile ein möglichst kurz gehaltener Abstand zur Objektoberfläche erreicht wird. Damit der zwischen Mikrosonde und Objektoberfläche frei laufende Strahl keine weitere Brechung und somit keine weitere Verstärkung der chromatischen Aberration erfährt, wird die Endfläche der Mikrosonde zusätzlich als konkave Fläche, deren Brennpunkt jeweils im Lichtleitfaserkern und im Messfleck liegt, ausgeführt. Die konkave Fläche dient zur Erzeugung des Referenzlichtbündels. Da sich zwischen Messfleck und konkaver Fläche kein dispersives Medium befindet, entstehen in diesem Fall keine wellenlängenabhängigen Wegunterschiede zwischen Mess- und Referenzlichtbündel. Die individuell angepassten, optischen Elemente und die sehr kleine, genau auf die Brennweite der Mikrosonde angepasste konkave Endfläche erfordern jedoch einen hohen Herstellungsaufwand für die Mikrosonde. Nachteilig an konkaven Referenzflächen nahe dem eigentlichen Messfleck ist neben der verringerten Divergenz des Messlichtbündels die Notwendigkeit einer $\mu m$ bis sub-pm genauen Positionierung der Konkavfläche zum Lichtaustrittspunkt der Singlemodefaser (Monomodefaser) der Mikrosonde, da das an der Konkavfläche reflektierte Referenzlichtbündel nur dann effektiv in die Lichtleitfaser zurückgekoppelt werden kann, wenn der virtuelle Fokuspunkt der Konkavfläche sehr gut mit dem typischerweise 2 - 5 $\mu m$ großen Lichtleitfaserkern überlappt. Diese Forderung kompliziert die Fassung und Justierung aller Komponenten zueinander maßgeblich und setzt eine schwer zu erreichende mechanische Langzeit- und Klimastabilität des Gesamtsystems voraus. Eine Miniaturisierung bei gleichzeitiger Robustheit der Mikrosonde ist damit kaum möglich.

Eine weitere Mikrosonde zur interferometrischen Vermessung mit Weißlicht-Interferometrie wird im Patentdokument DE 10 2010 022 421 beschrieben.

Hier wird Licht zweier Spektralbereiche auf das Messobjekt fokussiert und das reflektierte Licht mit dem vom Faserende reflektierten Referenzlicht überlagert und aufgenommen. Der entstandene Pfadunterschied wird durch ein zusätzliches Interferometer wieder ausgeglichen.

Es wird weiterhin auf das Dokument US2005/0174664 verwiesen, in dem ein Vielschicht-Filter beschrieben wird.

Entscheidend für eine hohe Genauigkeit und eine sehr gute Qualität des Messergebnisses, insbesondere bei der Weißlicht-Interferometrie, sind eine möglichst aberrationsfreie Erzeugung des Messflecks und geringe wellenlängenabhängige optische Wegunterschiede zwischen Mess- und Referenzlichtbündel.

Der Erfindung liegt deshalb die Aufgabe zugrunde, eine neue Möglichkeit für die Weißlicht-Interferometrie zu finden, die bei Verwendung eines ausgedehnten Spektralbereichs eine Kompensation der dispersionsbedingten Abhängigkeit der optischen Wegdifferenzen von der Wellenlänge zwischen Mess- und Referenzlichtbündel mittels effizienter und einfach miniaturisierbarer Mittel gestattet, auch wenn sich zwischen der optischen Fläche, die das Referenzlichtbündel aus dem Messlichtbündel auskoppelt, und dem Messfleck optische Elemente befinden, deren dispersive Materialien eine Wellenlängenabhängigkeit der optischen Wegdifferenzen hervorrufen. Eine erweiterte Aufgabe besteht darin, dass die Lösung auch zum Messen auf geneigten und/oder spiegelnden Objektoberflächen verwendbar ist.

Erfindungsgemäß wird die Aufgabe bei einer optische Mikrosonde für interferometrische Messungen, bei denen ein Lichtbündel Weißlicht oder mindestens zwei verschiedene Spektralbereiche aufweist, und die Mikrosonde eine das Lichtbündel übertragende Lichtleitfaser, eine Fokussieroptik zur Fokussierung des Lichtbündels auf eine Objektoberfläche und einen an die Lichtaustrittsfläche der Lichtleitfaser anschließenden Lichtweg zur Erzeugung eines divergenten Lichtbündels für die Ausnutzung der Apertur der Fokussieroptik enthält, wobei ein Messlichtbündel von der Lichtaustrittsfläche der Fokussieroptik zur Objektoberfläche und von dieser zurück durch die Mikrosonde in die Lichtleitfaser und ein an der Lichtaustrittsfläche der Lichtleitfaser durch Teilreflexion erzeugtes Referenzlichtbündel in die Lichtleitfaser zurückreflektiert werden, dadurch gelöst, dass ein Referenzstrahlteiler mit mindestens in zwei unterschiedlichen Spektralbereichen teilreflektierenden Filtern zur Erzeugung mindestens zweier transmittierter Messlichtbündel und zugehöriger reflektierter Referenzlichtbündel aus jeweils einander nicht überlappenden Spektralbereichen zwischen der Lichtaustrittsfläche der Lichtleitfaser und der Fokussieroptik angeordnet ist, wobei ein axialer Abstand zwischen jeweils zwei teilreflektierenden Filtern so eingestellt ist, dass eine spektral bedingte optische Wegdifferenz, welche die jeweiligen Messlichtbündel beim Durchlaufen dispersiver Elemente im Lichtweg zur Objektoberfläche und zurück erleiden, in gleicher Größe zwischen den jeweiligen Referenzlichtbündeln vorhanden ist, sodass die dispersionsbedingte optische Wegdifferenz zwischen den Messlichtbündeln und den zugehörigen Referenzlichtbündeln kompensiert ist, und dass die Fokussieroptik eine so geringe chromatische Aberration aufweist, dass sich die Fokusse der spektral unterschiedlichen Messlichtbündel mindestens in einem gewünschten Messbereich für die Objektoberfläche wenigstens teilweise überlappen.

Vorteilhaft weist der Referenzstrahlteiler einen Schichtaufbau aus mindestens zwei an die Spektralbereiche der spektral separierten Mess- und Referenzlichtbündel angepassten teilreflektierenden Interferenzfiltern und jeweils eine die teilreflektierenden Interferenzfilter axial separierenden transparenten Abstandsschicht auf, wobei die dispersionskompensierende Wirkung gegenüber den Messlichtbündeln durch Anpassung der Schichtdicke und der Brechzahl der Abstandsschicht einstellbar ist.

Vorzugsweise sind die teilreflektierenden Filter als Interferenzfilter mit steiler Kantenfilterfunktion zum Erzeugen spektral nicht überlappender Mess- und Referenzlichtbündel ausgebildet. In einer alternativen Ausführung können sie aber auch als spezielle Farbfilter zum Erzeugen spektral separierter Mess- und Referenzlichtbündel ausgebildet sein, wobei dann aufgrund einer weniger steilen Kantenfilterfunktion der Farbfilter die Lichtquelle spektral separierte Spektralbereiche zur Erzeugung spektral nicht überlappenden Mess- und Referenzlichtbündel aufweist.

In einer verallgemeinerten Variante weist der Referenzstrahlteiler eine Vielzahl teilreflektierender Filter in einem ineinander übergehenden Filterschichtsystem auf, wobei Schichten des Filterschichtsystems in Dicke und Brechzahl so gewählt sind, dass separate Abstandsschichten entfallen und somit eine quasi-kontinuierliche Dispersionskompensation erreichbar ist.

Zweckmäßig ist der Referenzstrahlteiler auf einer der Lichtaustrittsfläche der Lichtleitfaser gegenüberliegend angeordneten Oberfläche eines transparenten Trägermaterials aufgebracht. Er kann aber auch direkt auf die Lichtaustrittsfläche der Lichtleitfaser aufgebracht sein. Dabei ist er vorzugsweise als Schichtsystem auf die Lichtaustrittsfläche der Lichtleitfaser aufgedampft.

In einer alternativen Bauform kann der Referenzstrahlteiler direkt auf die Lichtaustrittsfläche der Lichtleitfaser aufgeklebt sein, wobei ein als Herstellungshilfe verwendetes Trägermaterial entweder an dem Schichtaufbau verbleibt oder abziehbar ist.

Die Fokussieroptik ist vorteilhaft aus einer herkömmlichen refraktiven Optik und einer diffraktiven Optik zur Korrektur der chromatischen Aberration zusammengesetzt. In einer bevorzugten Variante enthält die Fokussieroptik eine GRIN-Linse, die mit einer diffraktiven Optik zur Korrektur der chromatischen Aberration kombiniert ist.

Besonders vorteilhaft ist es, wenn die Fokussieroptik eine GRIN-Linse sowie eine zusätzliche refraktive Optik zur Erhöhung der objektseitigen numerischen Apertur enthält und mit einer diffraktiven Optik zur Korrektur der chromatischen Aberration kombiniert ist. Dabei ist die refraktive Optik zweckmäßig eine als Frontlinse der Fokussieroptik gegenüber der Objektoberfläche ausgebildete Plankonvex-Linse, sodass die Fokussieroptik eine über die nominelle numerische Apertur der GRIN-Linse erhöhte objektseitige numerische Apertur von NA > 0,55 aufweist.

Zweckmäßig ist die diffraktive Optik zur Korrektur der chromatischen Aberration als Schichtsystem auf eine optische Oberfläche der Fokussieroptik aufgebracht.

Zur Korrektur der chromatischen Aberration kann die Fokussieroptik in einer alternativen Ausführung als Achromat oder insbesondere als Apochromat ausgebildet sein.

Die Aufgabe der Erfindung wird ferner bei einer Anordnung zur Weißlicht-Interferometrie mit einem Interferometer, einer Mikrosonde zum Vermessen einer Objektoberfläche, einer Lichtquelle mit Weißlichtspektrum oder mit mindestens zwei verschiedenen Spektralbereichen, einer Lichtleitfaser zum Transport des Lichtquellenlichts in die Mikrosonde und zur Übertragung des von der Mikrosonde und der Objektoberfläche zurückreflektierten Lichts in das Interferometer, einer Lichteinkoppelfaser zur Herstellung einer optischen Verbindung zwischen Lichtquelle und Lichtleitfaser und einer in der Mikrosonde befindliche Fokussieroptik, wobei in der Mikrosonde zwischen einer Lichtaustrittsfläche der Lichtleitfaser und der Fokussieroptik ein Lichtweg zum Erzeugen eines divergenten Lichtbündels für die Ausnutzung der Apertur der Fokussieroptik zur Erzeugung von mindestens zwei spektral verschiedenen Messlichtbündeln vorhanden ist, der eine auf die numerische Apertur der Lichtleitfaser und die Apertur der Fokussieroptik angepasste Größe sowie einen Referenzstrahlteiler zur Erzeugung von mindestens zwei spektral verschiedenen Referenzlichtbündeln aufweist, dadurch gelöst, dass der Referenzstrahlteiler mindestens zwei spektral unterschiedlich teilreflektierende Filter zur Erzeugung von zwei transmittierten Messlichtbündeln und zugehörigen reflektierten Referenzlichtbündeln aus jeweils einander nicht überlappenden Spektralbereichen enthält, wobei die teilreflektierenden Filter zueinander einen solchen axialen Abstand aufweisen, dass eine spektral bedingte optische Wegdifferenz, die für Zentralwellenlängen $\lambda_1$, $\lambda_2$, ... der unterschiedlichen Spektral bereiche der Messbündel beim Durchlaufen dispersiver Optiken im Lichtweg zur Objektoberfläche und zurück entsteht, in gleicher Größe zwischen den zugehörigen Referenzlichtbündeln eingestellt ist, sodass bei der Überlagerung von Mess- und Referenzlichtbündeln die dispersionsbedingte Wegdifferenz kompensiert wird, und die Fokussieroptik eine so geringe chromatische Aberration für die verwendeten unterschiedlichen Spektralbereiche aufweist, dass sich die Fokusse der spektral unterschiedlichen Messlichtbündel mindestens in einem gewünschten Messbereich für die Objektoberfläche wenigstens teilweise überlappen.

Ein weiterer Gegenstand der Erfindung ist die Verwendung einer erfindungsgemäßen Mikrosonde zur Kohärenztomographie, bei der infolge der Kompensation der dispersionsbedingten Wegdifferenz und der Korrektur der chromatischen Aberration bei der Kohärenztomographie eine absolute interferometrische Weglängenmessung im Nanometerbereich auch für stark geneigte Messflächen bei Grundabständen zwischen Mikrosonde und Messobjekt von einigen hundert Mikrometern erreicht wird.

Ferner wird die Aufgabe bei einem Verfahren zur Herstellung eines dispersionskompensierenden Referenzstrahlteilers für eine Mikrosonde für interferometrische Messungen, der ein Lichtbündel in mindestens zwei reflektierte Referenzlichtbündel und zugehörige transmittierte Messlichtbündel aus unterschiedlichen Spektralbereichen aufteilt, mit den Schritten gelöst:

a) Aufbringen eines ersten Wechselschichtsystems, das ein strahlteilendes Interferenzfilter zur Erzeugung eines ersten Mess- und eines ersten Referenzstrahles aus einem kurzwelligeren Spektralanteil des Lichtbündels bildet, auf ein transparentes Trägermaterial mit feinoptischer Oberflächenqualität,
b) Aufbringen einer transparenten Abstandsschicht in einer vorbestimmten Schichtdicke, die in Abhängigkeit von einer optischen Wegdifferenz, welche die spektral unterschiedlichen Messlichtbündel beim Durchlaufen dispersiver Elemente im Lichtweg bis zu einer Objektoberfläche und zurück gegenüber den jeweils zugehörigen Referenzlichtbündeln erleiden, zur Kompensation dieser Wegdifferenz angepasst ist,
c) Aufbringen eines zweiten Wechselschichtsystems, das ein strahlteilendes Interferenzfilter zur Erzeugung eines zweiten Mess- und eines zweiten Referenzstrahles aus einem langwelligeren Spektralanteil des Lichtbündels bildet, auf die Abstandsschicht,
d) Trennen des Trägermaterials mit dem aufgebrachten Schichtenaufbau aus Interferenzfilter, Abstandsschicht und Interferenzfilter in einzelne Referenzstrahlteiler.

Mit der Erfindung ist es möglich, für die Weißlicht-Interferometrie eine Lösung anzugeben, die bei Verwendung eines ausgedehnten Spektralbereichs eine Kompensation der dispersionsbedingten Abhängigkeit der Weglängendifferenzen von der Wellenlänge zwischen Mess- und Referenzlichtbündel mittels effizienter und einfach miniaturisierbarer Mittel gestattet, wenn sich zwischen der optischen Fläche, die das Referenzlichtbündel auskoppelt, und dem Messfleck der Messlichtbündel optische Elemente, wie z.B. Linsen, befinden, deren dispersive Materialien eine Wellenlängenabhängigkeit der optischen Wegdifferenz hervorrufen. Mit der Erzeugung des Referenzsignals direkt am Lichtaustritt der Lichtleitfaser ist die Mikrosonde konstruktiv sehr einfach und mechanisch langzeitstabil aufzubauen und gut zu miniaturisieren, da komplexe Mechaniken entfallen. Darüber hinaus ist eine sondenspezifische Kompensation der Dispersion im Interferometer nicht mehr nötig. Ferner ist die Erfindung bei Verwendung von Fokussieroptiken mit hoher numerischer Apertur (z. B. NA > 0,55) auch zum interferometrischen Messen insbesondere auf geneigten und/oder spiegelnden Objektoberflächen geeignet.

Die Erfindung soll nachfolgend anhand von Ausführungsbeispielen näher erläutert werden. Die dazugehörigen Zeichnungen zeigen:

Fig. 1    eine schematische Darstellung des prinzipiellen optischen Aufbaus der Mikrosonde,

Fig. 2    eine bevorzugte Ausführung des optischen Aufbaus der Mikrosonde,

Fig. 3    eine Darstellung der Verfahrensschritte zur Herstellung eines Referenzstrahlteilers,

Fig. 4    die Wirkung des Referenzstrahlteilers mit zwei beabstandeten teilreflektierenden Filtern,

Fig. 5    eine Anordnung zur Verwendung der Mikrosonde zur Weißlicht-Interferometrie.

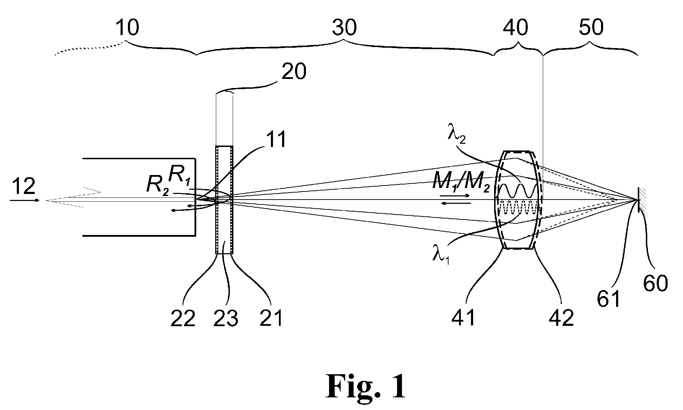

Gemäß dem in Fig. 1 gezeigten optischen Aufbau ist bei der dargestellten Mikrosonde 80 eine Lichtleitfaser 10 zur Lichtankopplung vorgesehen. Gegenüber einer Lichtaustrittsfläche 11 der Lichtleitfaser 10 ist ein Referenzstrahlteiler 20 angeordnet. Dieser weist mindestens zwei teilreflektierende Filter zur Auskopplung von Referenzlichtbündeln $R_1$ und $R_2$ aus mindestens zwei spektral unterschiedlichen Messlichtbündeln $M_1$ und $M_2$ auf. Der Referenzstrahlteiler 20 in Fig. 1 weist dazu wenigstens ein teilreflektierendes Interferenzfilter 21 für ein kurzwelligeres Lichtspektrum um eine Zentralwellenlänge $\lambda_1$ und ein teilreflektierendes Interferenzfilter 22 für ein langwelligeres Lichtspektrum um eine Zentralwellenlänge $\lambda_2$ auf. Zwischen dem Interferenzfilter 21 und 22 ist eine Abstandsschicht 23 angeordnet, die nachfolgend noch genauer beschrieben wird. Es sind anstelle der Interferenzfilter 21 und 22 auch andere teilreflektierende spektrale Kantenfilter einsetzbar, soweit die daraus resultierenden Referenzlichtbündel $R_1$ und $R_2$ und Messlichtbündel $M_1$ und $M_2$ ausreichend spektral separiert sind.

Der Lichtleitfaser 10 und dem Referenzstrahlteiler 20 folgend, ist eine Fokussieroptik 40 im Strahlengang angeordnet. Zwischen der Lichtaustrittsfläche 11 und der Fokussieroptik 40 ist ein Lichtweg 30 mit optisch dünnem Medium (z.B. Luft) vorgesehen. Der optische Aufbau der Mikrosonde 80 ist durch die Fokussieroptik 40 abgeschlossen, vor der eine Objektoberfläche 60 (als Messobjekt) mit einem Messabstand 50 gegenüber angeordnet.

Für die Zuführung von breitbandigem Licht 12 als Weißlichtspektrum oder aus mindestens zwei spektralen Lichtanteilen mit einer begrenzten Bandbreite, aus denen die gewünschten separierten Mess- und Referenzlichtbündel $M_1$ und $R_1$ bzw. $M_2$ und $R_2$ erzeugbar sind, und dessen Einkopplung in die in Fig. 1 dargestellte Mikrosonde 80, wird eine Lichtleitfaser 10 in Form einer Monomode-Faser verwendet. Da sich in der Monomode-Faser nur der Grundmode der eingekoppelten Strahlung ausbreiten kann, bleiben bei den für interferometrische Messungen verwendeten Messlichtbündeln $M_1$ und $M_2$ definierte Phasenverhältnisse für die Zentralwellenlängen $\lambda_1$ und $\lambda_2$ erhalten.

Durch den Referenzstrahlteiler 20 erfolgt entsprechend der spektralen Auslegung der Interferenzfilter 21 bzw. 22 eine Filterung und Aufteilung des zur Interferenzmessung verwendeten Lichts 12. An dem Interferenzfilter 21 wird jeweils ein Messlichtbündel $M_1$ und ein diesem zugeordnetes Referenzlichtbündel $R_1$ erzeugt. Das Messlichtbündel $M_1$ und das Referenzlichtbündel $R_1$ weisen Licht in einem übereinstimmend kurzwelligen Spektralbereich mit der Zentralwellenlänge $\lambda_1$ auf. In analoger Weise wird an dem Interferenzfilter 22 jeweils ein Messlichtbündel $M_2$ und ein zugehöriges Referenzlichtbündel $R_2$ erzeugt, die beide Licht in einem gleichen langwelligen Spektralbereich mit der Zentralwellenlänge $\lambda_2$ aufweisen. Die Referenzlichtbündel $R_1$ bzw. $R_2$ werden durch Teilreflexion am entsprechenden Interferenzfilter 21 bzw. 22 in die Lichtleitfaser 10 zurückreflektiert, wobei die reflektierten Anteile lediglich wenige Prozent, vorzugsweise zwischen 2 und 10 %, der Intensität des gefilterten Spektralbandes betragen. Die Messlichtbündel $M_1$ bzw. $M_2$ werden durch den Referenzstrahlteiler 20 transmittiert und divergieren mit der numerischen Apertur der Lichtleitfaser 10 in den Lichtweg 30.

Von der Fokussieroptik 40 werden die Messlichtbündel $M_1$ und $M_2$ zu einem gemeinsamen Messfleck 61 auf der Objektoberfläche 60 fokussiert und ein Anteil der Messlichtbündel $M_1$ bzw. $M_2$ von dort in die Lichtleitfaser 10 reflektiert oder zurückgestreut. Durch die konkrete Ausführung der Interferenzfilter 21 und 22 werden sowohl die spektrale Lage und Breite der mit hoher Kantensteilheit der Spektralbereiche erzeugten Messlichtbündel $M_1$ und $M_2$ als auch deren Anzahl festgelegt. Die Messlichtbündel $M_1$ und $M_2$ werden vorzugsweise nur schmalbandig ausgeführt. Die Anzahl der Interferenzfilter 21, 22, ... kann an die Erfordernisse des interferometrischen Auswertungsverfahrens angepasst werden.

Es besteht auch die Möglichkeit den Referenzstrahlteiler 20 mittels spezieller Farbfilter zu realisieren. Aufgrund der geringeren Kantensteilheit der Farbfilter wird dazu eine Lichtquelle verwendet, die bereits spektral separierte Spektralbereiche bereitstellen kann um die spektrale Trennung von Mess- und Referenzlichtbündel $M_1$ und $R_1$ zu Mess- und Referenzlichtbündel $M_2$ und $R_2$ zu ermöglichen.

Bei dem in Fig. 1 gezeigten Prinzipaufbau wird der Referenzstrahlteiler 20 mit einem Schichtaufbau aus zwei an die Spektralbereiche der spektral separierten Mess- und Referenzlichtbündel $M_1$ und $R_1$ bzw. $M_2$ und $R_2$ angepassten Interferenzfilter 21 bzw. 22 verwendet. Das von der Lichtaustrittsfläche 11 Lichtleitfaser 10 der weiter entfernt angeordnete Interferenzfilter 21 reflektiert einen Teil des aus der Lichtleitfaser 10 austretenden kurzwelligeren Lichts in einem begrenzten Spektralbereich um die Zentralwellenlänge $\lambda_1$ als Referenzlichtbündel $R_1$ zurück in die Lichtleitfaser 10 und lässt das Messlichtbündel $M_1$ passieren. Das nahe der Lichtaustrittsfläche 11 angeordnete Interferenzfilter 22 reflektiert einen Teil des aus der Lichtleitfaser 10 austretenden langwelligeren Lichtes in einem begrenzten Spektralbereich um die Zentralwellenlänge $\lambda_2$ als Referenzlichtbündel $R_2$ zurück in die Lichtleitfaser 10 und lässt das Messlichtbündel $M_2$ passieren.

Zwischen den teilreflektierenden Interferenzfiltern 21 bzw. 22 ist die für die beiden unterschiedlichen Spektralbereiche transparente Abstandsschicht 23 angeordnet. Diese weist - unter Beachtung der Brechzahl des Materials der Abstandsschicht 23 - eine genau auf die durch Dispersion verursachte optische Wegdifferenz der Messlichtbündel $M_1$ bzw. $M_2$ angepasste Dicke auf, wobei die optische Wegdifferenz durch dispergierende Materialien (optisch dichtere Medien, wie z.B. die Fokussieroptik 40) nach Austritt aus der Lichtaustrittsfläche 11 auf dem Weg über die Reflexion an der Objektoberfläche 60 bis zum Wiedereintritt in die Lichtleitfaser 10 entsteht.

Der Referenzstrahlteiler 20 ist der Lichtaustrittsfläche 11 der Lichtleitfaser 10 folgend im Lichtweg 30 angeordnet. Der Schichtaufbau kann mit üblichen Verfahren zur Beschichtung optischer Oberflächen hergestellt werden.

Der Lichtweg 30 zwischen der Lichtaustrittsfläche 11 und der Fokussieroptik ist nach dem Verlassen der Lichtleitfaser 10 zur Aufweitung der Messlichtbündel $M_1$ und $M_2$ vorgesehen. Die Länge des Lichtwegs 30 ist auf die Austrittsapertur der Lichtleitfaser 10 und auf die Eintrittsapertur der nachfolgenden Fokussieroptik 40 angepasst, sodass die divergierenden Messlichtbündel $M_1$ bzw. $M_2$ die freie Apertur der Fokussieroptik 40 maximal ausnutzen können. Der Lichtweg 30 kann aus jedem beliebigen Medium mit möglichst niedriger Brechzahl bestehen, insbesondere können dazu gasförmige Medien, vorzugsweise Luft verwendet werden. Günstig ist allerdings ein Medium, dessen Dispersion möglichst gering oder Null ist, damit die Wellenlängenabhängigkeit der optischen Wegunterschiede nicht unnötig erhöht wird.

Durch die Fokussieroptik 40 werden die Messlichtbündel $M_1$ bzw. $M_2$ auf einen auf der Objektoberfläche 60 liegenden Messfleck 61 fokussiert. Aufgrund der unterschiedlichen Spektralbereiche um eine Zentralwellenlänge $\lambda_1$ bei Messlichtbündel $M_1$ bzw. um einer Zentralwellenlänge $\lambda_2$ bei Messlichtbündel $M_2$ entsteht beim Durchtritt durch die Fokussieroptik 40 eine wellenlängenabhängige Dispersion. Die Dispersion zieht zwei zu unterscheidende Effekte nach sich:

1. Eine durch das Brechungsgesetz beschreibbare chromatische Aberration (chromatische Fokusverschiebung) und
2. eine für Interferenzmessungen unerwünschte optische Wegdifferenz = Optical Path Difference (OPD), die sich aus dem Produkt eines geometrischen Lichtwegs s und einer wellenlängenabhängigen Brechzahl ergibt:

$$OPD(\lambda) = s * n(\lambda).$$

Die letztgenannte OPD aufgrund wellenlängenabhängiger Brechzahlen der Fokussieroptik 40 führt dazu, dass zwischen den Referenz- und Messlichtbündeln $R_1$ und $M_1$ bzw. $R_2$ und $M_2$ Phasenunterschiede auftreten, die unabhängig von einer mit der Interferenzmessung zu ermittelnden Abstandsänderung zwischen Objektoberfläche 60 und Fokussieroptik 40 entstehen und somit eine Verfälschung des Messergebnisses verursachen. Die wellenlängenabhängige Beeinflussung der Messlichtbündel $M_1$ bzw. $M_2$ wird in Fig. 1 durch die mit unterschiedlichen Linienarten dargestellte Fokussieroptik 40 verdeutlicht, wobei die für das langwelligere Messstrahlbündel $M_2$ wirksame Brechzahl durch eine mit durchgehender Linie dargestellte (fiktive) Fokussieroptik 41 und die für das kurzwelligere Messstrahlbündel $M_1$ wirksame Brechzahl durch eine mit unterbrochener Linie dargestellte (fiktive) Fokussieroptik 42 symbolisiert wird.

Außerdem kommt es, wie oben unter Ziffer 1 angegeben, im Messfleck 61 zur chromatischen Längsaberration zwischen den Messlichtbündeln $M_1$ und $M_2$. Infolge dieser Wellenlängenabhängigkeit bestünde so zwischen Messlichtbündel $M_1$ und $M_2$ eine chromatische Fokusverschiebung, die erfindungsgemäß ebenfalls vermieden werden soll.

Bei dem in Fig. 1 dargestellten optischen Aufbau erfolgen deshalb zwei unterschiedliche chromatische Korrekturen: eine zur Kompensation der optischen Wegdifferenzen zwischen den Referenz- und Messlichtbündeln $R_1$ und $M_1$ bzw. $R_2$ und $M_2$ und eine zur Korrektur der chromatischen Längsaberration zwischen den Messlichtbündeln $M_1$ und $M_2$.

Die chromatische Längsaberration kann durch verschiedene Ansätze korrigiert werden: Klassisch durch eine sogenannten Achromaten, d.h. hier wird eine Sammel- und eine Zerstreuungslinse aus Gläsern unterschiedlicher Dispersion kombiniert und damit erreicht, dass der Fokus für zwei unterschiedliche Wellenlängen(bereiche) zur Überdeckung gebracht wird. Durch Verwendung komplexerer Kombinationen können auch mehrere Wellenlängen chromatisch korrigiert werden. Vorteilhaft kann dazu ein Apochromat zum Einsatz kommen.

Alternativ zu Achromaten und Apochromaten kann auch eine Kombination aus einer refraktiven Sammellinse mit einer diffraktiven Sammellinse zu einer guten Korrektur der chromatischen Aberration führen. Im Vergleich zu Sammellinsen aus Gläsern mit normaler Dispersion weisen diffraktive Linsen auch als Sammellinse, eine entgegengesetzte sehr starke Abhängigkeit der Brennweite von der Wellenlänge auf.

Die vorstehend beschriebenen Ansätze zur Korrektur der Längsaberration kompensieren aber nicht die sogenannte Phasendispersion, d.h. die durch wellenlängenabhängige Änderung der Brechzahl entstehenden optischen Wegdifferenzen. Die spektrale Abhängigkeit der optischen Weglängen wird erfindungsgemäß durch den speziellen Referenzstrahlteiler 20 kompensiert, sodass jeweils die zusammengehörigen Mess- und Referenzlichtbündel $M_1$ und $R_1$ sowie $M_2$ und $R_2$ keine Phasendifferenzen aufweisen, die aus der Wellenlängenabhängigkeit der Brechzahl für die unterschiedlichen Spektralbereiche resultieren.

Da sich die Phasendispersion der Messlichtbündel $M_1$ bzw. $M_2$ negativ auf die Messgenauigkeit bzw. die Auflösung der interferometrischen Messung auswirkt, muss eine spektral bedingte optischen Wegdifferenz zwischen den Messlichtbündeln $M_1$ und $M_2$ vermieden bzw. kompensiert werden. Zu deren Kompensation werden deshalb mittels einer Abstandsschicht 23 definiert voneinander beabstandete Interferenzfilter 21 bzw. 22 benutzt. Durch Anpassen der Dicke der Abstandsschicht 23, die von den Messlichtbündeln $M_1$ und $M_2$ sowie nur vom Referenzlichtbündel $R_1$ (jeweils zweimal) durchlaufen wird, ist in Abhängigkeit von der optischen Wegdifferenz zwischen den spektral unterschiedlichen Messlichtbündeln $M_1$ bzw. $M_2$, die beim (zweimaligen) Durchlauf durch die Fokussieroptik 40 entsteht, der Dispersionsunterschied zwischen den jeweils zugehörigen Referenzlichtbündeln $R_1$ und $R_2$ in gleicher Größe so einstellbar, dass er der optischen Wegdifferenz zwischen den Messlichtbündeln $M_1$ und $M_2$ entspricht. Somit wird die für die interferometrische Messung unerwünschte, durch Phasendispersion in den Messlichtbündeln $M_1$ bzw. $M_2$ entstehende, optische Wegdifferenz ausgeglichen. Die Wirkung der Abstandsschicht 23 ist außerdem von der Brechzahl des zu ihrer Herstellung verwendeten Materials abhängig und muss bei der Einstellung der Dicke beachtet werden. Vorzugsweise wird ein Material mit einer den dispersiven Elementen der Fokussieroptik 40 (z.B. BK7) angeglichenen Brechzahl verwendet.

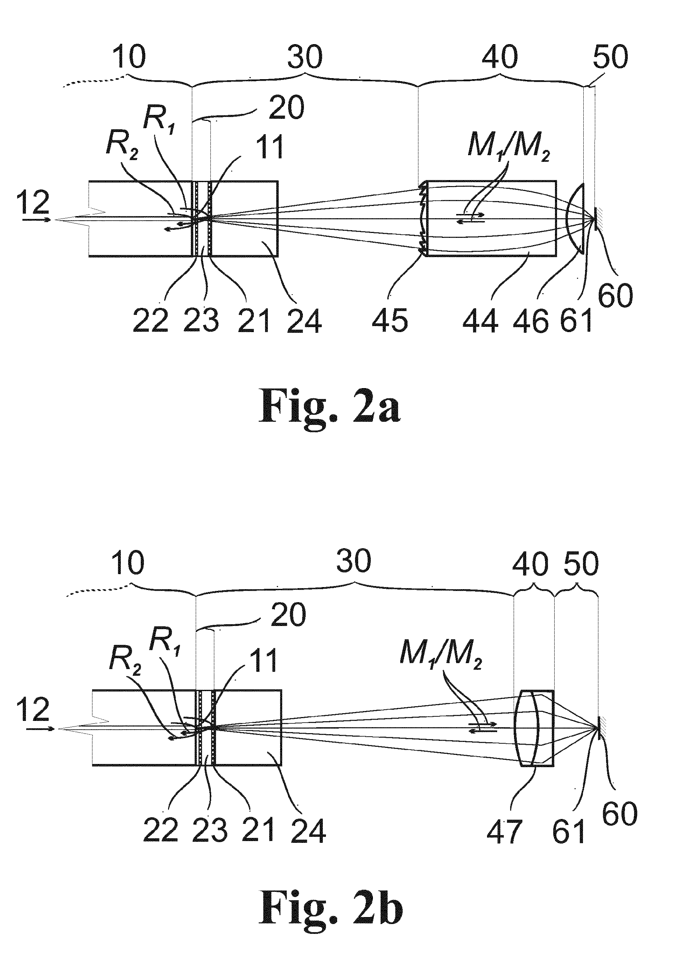

Ein vorteilhafter dispersionskompensierender und aberrationskorrigierender Aufbau der Mikrosonde 80 ist in Fig. 2a dargestellt. Der Referenzstrahlteiler 20 weist hier einen gegenüber Fig. 1 modifizierten Aufbau auf. Bei der Herstellung des Referenzstrahlteilers 20 mit einem unten noch genauer beschriebenen Verfahren wird der aus Interferenzfilter 21, Abstandsschicht 23 und Interferenzfilter 22 bestehende Schichtaufbau auf einem separaten, transparenten Trägermaterial 24 aufgebracht, das auf der Seite des Schichtaufbaus mit der Lichtaustrittsfläche 11 der Lichtleitfaser 10 verbunden wird. Die optische Verbindung des Referenzstrahlteilers 20 mit der Lichtleitfaser 10 kann über eine optische Kittung oder Klebung zwischen dem Interferenzfilter 22 und der Lichtaustrittsfläche 11 erfolgen. Die Dicke des Trägermaterials 24 ist für die Funktion der Mikrosonde 80 nicht von wesentlicher Bedeutung, beeinflusst aber die Länge des verbleibenden Lichtwegs 30. Soweit das Trägermaterial 24 noch die notwendige mechanische Stabilität aufweist, kann es einerseits sehr dünn gehalten oder andererseits dazu verwendet werden, den nachfolgenden Lichtweg 30 komplett bis zur Fokussieroptik 40 auszufüllen. Bei der Auslegung der Abstandsschicht 23 muss jedoch die sich mit der Dicke des Trägermaterials 24 ändernde Dispersion Beachtung finden.

Es besteht auch die Möglichkeit, den Referenzstrahlteiler 20 nach dem Anbringen an der Lichtaustrittsfläche 11 vom Trägermaterial 24 zu befreien. Dazu wird beispielsweise eine Transferfolie als Trägermaterial 24 verwendet, auf welcher der Schichtaufbau des Referenzstrahlteilers 20 zunächst hergestellt wird. Nach der Verbindung der Lichtaustrittsfläche 11 mit dem Interferenzfilter 22 kann die Transferfolie vom Referenzstrahlteiler 20 getrennt werden.

Auch ist es möglich, die Interferenzfilter 21 und 22 durch ein gebräuchliches Beschichtungsverfahren direkt auf der Lichtaustrittsfläche 11 der Lichtleitfaser 10 aufzubringen.

Für die Fokussieroptik 40 wird in Fig. 2a eine GRIN-Linse 44 verwendet. Die Korrektur der chromatischen Längsaberration erfolgt durch eine auf der, dem Lichtweg 30 zugewandten Seite der GRIN-Linse 44 angeordnete diffraktive Optik 45, wobei die GRIN-Linse 44 als Träger dieser diffraktiven Optik 45 verwendet wird.

Die diffraktive Optik 45 kann durch übliche Beschichtungsverfahren direkt auf eine ebene oder auch gekrümmte Oberfläche der Fokussieroptik 40 aufgebracht oder getrennt von der Fokussieroptik 40 hergestellt und ergänzend zur Fokussieroptik 40 in den Lichtweg 30 eingesetzt werden.

Alternativ kann zur Korrektur der Längsaberration der Messlichtbündel $M_1$ bzw. $M_2$ anstelle der in Fig. 2a dargestellten GRIN-Linse 44 mit diffraktiver Optik 45 auch eine konventionelle Sammeloptik mit diffraktiver Beschichtung (nicht gezeichnet) als Fokussieroptik 40 eingesetzt sein.

Durch die Länge der GRIN-Linse 44 wird die Stärke der Fokussierung der Messlichtbündel $M_1$ bzw. $M_2$ auf den Messfleck 61 eingestellt. Daraus ergibt sich auch die Länge eines zwischen Fokussieroptik 40 und Objektoberfläche 60 liegenden Messabstands 50 und die numerische Apertur, mit der die Messlichtbündel $M_1$ bzw. $M_2$ die GRIN-Linse 44 verlassen.

Damit auch auf geneigten oder spiegelnden Objektoberflächen 60 ein möglichst hoher Anteil der von der Objektoberfläche 60 zurückreflektierten Messlichtbündel $M_1$ bzw. $M_2$ mit der Mikrosonde 80 erfasst werden kann, sollte die numerische Apertur der Fokussieroptik 40 möglichst groß sein. Zur Verbesserung der mit GRIN-Linse 44 erreichbaren numerischen Apertur von NA ≤ 0,55 kann die in Fig. 2a dargestellte GRIN-Linse 44 um eine zusätzliche Plankonvex-Linse 46 zu einer stärker fokussierenderen Fokussieroptik 40 erweitert werden. Diese der GRIN-Linse 44 direkt nachfolgend angeordnete Plankonvex-Linse 46, weist mit ihrer Planfläche in Richtung Objektoberfläche 60 und vergrößert die numerische Apertur auf bis zu NA ≤ 0,85. Dadurch sind geneigte oder spiegelnde Objektoberflächen 60 sehr viel genauer antastbar und ihre Lage und Lageänderungen zuverlässig messbar.

Bei Verwendung einer Kombination aus einer refraktiven Sammellinse anstelle der GRIN-Linse 44 und einer diffraktiv beschichteten Sammellinse (nicht gezeichnet) kann entweder aufgrund der fokussierenden Eigenschaften der diffraktiv beschichteten Sammellinse die zusätzliche Plankonvex-Linse 46 (gemäß Fig. 2a) substituiert werden oder selbst als diffraktiv beschichtete Sammellinse ausgebildet sein.

Alternativ kann die Aberration der Fokussieroptik 40 für die Messlichtbündel $M_1$ und $M_2$ auch dadurch beseitigt werden, indem - wie in Fig. 2b gezeigt - ein Achromat 47, der eine Zerstreuungslinse und eine Sammellinse aufweist und für die Zentralwellenlängen $\lambda_1$ und $\lambda_2$ der Messlichtbündel $M_1$ und $M_2$ korrigiert ist, verwendet wird. Ebenso ist als weitere Alternative ein Apochromat (aus zwei Sammellinsen und einer dazwischen liegenden Zerstreuungslinse, nicht gezeichnet), der für die Zentralwellenlängen $\lambda_1$ und $\lambda_2$ sowie eine mittlere Wellenlänge und somit nahezu vollständig korrigiert ist, als aberrationsfreie Fokussieroptik 40 einsetzbar.

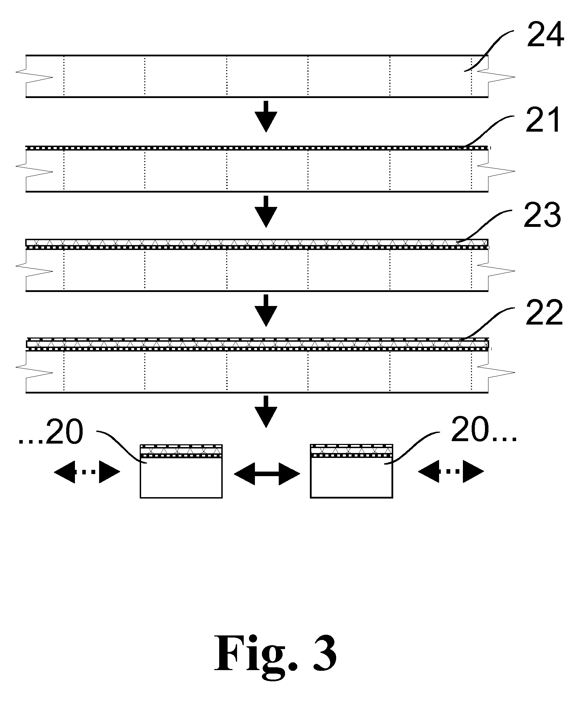

Für die Herstellung eines dispersionskompensierenden Referenzstrahlteilers 20 für mindestens zwei Spektralbereiche wird eine bevorzugte Möglichkeit anhand des in Fig. 3 dargestellten Verfahrensablaufs beschrieben. Zur Kennzeichnung der unterschiedlichen Spektralbereiche werden die Zentralwellenlängen $\lambda_1$ und $\lambda_2$ hier beispielhaft mit zwei konkreten Wellenlängenangaben benannt. Es können aber auch beliebige andere, im Weißlichtspektrum vorhandene Spektralbereiche genutzt und der Referenzstrahlteiler 20 für deren Zentralwellenlängen $\lambda_1$ und $\lambda_2$ angepasst werden.

In einem ersten Verfahrensschritt a) wird als Trägermaterial 24 ein planparalleles optisches Substrat, dass für die zu verwendenden Spektralbereiche hinreichend transparent ist, bereitgestellt. Dessen Oberfläche weist eine Qualität auf, die zu feinoptisch bearbeiteten optischen Oberflächen äquivalent ist.

In einem zweiten Verfahrensschritt b) erfolgt das Aufbringen eines ersten Interferenzfilters 21 in Form eines Wechselschichtsystems, das nur für den kurzwelligeren Spektralbereich mit 2% < R < 10 % teilreflektierend wirkt und eine Transmission T = 1 - R aufweist. Hierfür werden Verfahren zur optischen Beschichtung von Oberflächen, wie sie zur Herstellung von Interferenzfiltern bekannt sind, eingesetzt.

In einem nachfolgenden Verfahrensschritt c) wird auf den Interferenzfilter 21 die transparente Abstandsschicht 23 aus einem Material mit glasähnlicher Brechzahl (z. B. vergleichbar mit BK7) aufgetragen.

In einem vierten Verfahrensschritt d) erfolgt eine weitere Beschichtung auf die transparente Abstandsschicht 23 mit einem zweiten Interferenzfilter 22 in Form eines Wechselschichtsystems, das nur für den langwelligeren Spektralbereich mit 2% < R < 10 % teilreflektierend wirkt und eine Transmission T = 1 - R aufweist.

Der abschließende Verfahrensschritt e) beinhaltet eine Vereinzelung des beschichteten Trägermaterials 24 in separate spektralselektive Referenzstrahlteiler 20, die in ihrer Größe auf den Durchmesser der zu beeinflussenden Messstrahlbündel angepasst sind.

Optional können die Verfahrensschritte c) und d) vor Ausführung des Schrittes e) sooft wiederholt werden, wie in dem Referenzstrahlteiler 20 für mehrere verschiedene Spektralbereiche vorgesehene Interferenzfilter 21, 22, ... benötigt werden. Im einem Extremfall mit einer Vielzahl von Interferenzfiltern, die faktisch ein Kontinuum von Reflexionswellenlängen auskoppeln sollen, können die einzelnen Interferenzfilter 21, 22, ... zu einem einzigen Wechselschichtsystem entarten und demzufolge Schritt c) entfallen. Im Ergebnis entsteht ein quasi-kontinuierlich teilreflektierender Strahlteiler.

Als ein, in Verfahrensschritt a) bereitgestelltes Trägermaterial 24 kann auch eine Transferfolie verwendet werden, auf welcher der Schichtaufbau temporär aufgebracht wird. Nach Verfahrensschritt d) oder e) kann der Schichtaufbau dann auf einen anderen Träger, vorzugsweise die Lichtaustrittsfläche 11 der Lichtleitfaser 10, transferiert, durch optisches Kitten befestigt und von der Transferfolie befreit werden.

Das optische Substrat wird gemäß dem hier gewählten Beispiel zuerst mit einem ersten Wechselschichtsystem für den kurzwelligeren Spektralbereich beschichtet, dass einen schmalbandigen Interferenzfilter 21 in Form eines teilreflektierenden Bandpasses von 735 bis 765 nm bildet und eine Zentralwellenlänge $\lambda_1$ von 750 nm aufweist. Danach wird die transparente Abstandsschicht 23 auf das erste Wechselschichtsystem aufgetragen und anschließend die Beschichtung des zweiten Wechselschichtsystems für den langwelligeren Spektralbereich vorgenommen. Im Beispiel bildet das zweite Wechselschichtsystem ein schmalbandiges Interferenzfilter 22 in Form eines teilreflektierenden Bandpasses im Spektralbereich von 815 bis 845 nm, mit einer Zentralwellenlänge $\lambda_1$ von 830 nm. Für die angegebenen Spektralbereiche besitzen die so erzeugten Interferenzfilter 21 bzw. 22 einen Reflexionsanteil von 0,2 - 40%, sodass sie jeweils ein Referenzlichtbündel $R_1$ bzw. $R_2$ entgegen der Strahleinfallsrichtung zurückreflektieren und ein Messlichtbündel $M_1$ bzw. $M_2$ mit einem Anteil von 60-99.8% transmittieren. Der Wert des Reflexionsanteils ist i. d. R. so anzupassen, dass sich ein optimaler Interferenzkontrast bei Überlagerung des rückgekoppelten Messsignals mit einem Interferenzsignal ergibt. Er ist damit auch abhängig vom Reflexionsvermögen der Objektoberfläche 60.

Die Reihenfolge der Beschichtung der Interferenzfilter 21 bzw. 22 muss je nach Einfallsrichtung des Lichts 12 in den Referenzstrahlteiler 20 angepasst werden. D. h. wird der Schichtaufbau aus Interferenzfilter 21, Abstandsschicht 23 und Interferenzfilter 22 direkt auf einer Endfläche eines das Licht 12 einleitenden optischen Elements (z. B. der Lichtaustrittsfläche 11 der Lichtleitfaser 10) vorgenommen, muss die Beschichtung des ersten und zweiten Wechselschichtsystems in umgekehrter Reihenfolge, beginnend mit dem Wechselschichtsystem für den langwelligsten Spektralbereich, vorgenommen werden.

Unter Beachtung der Brechzahl des zur Herstellung der Abstandsschicht 23 verwendeten Materials wird deren Dicke auf die exakt berechnete optische Wegdifferenz zwischen den Messlichtbündeln $M_1$ und $M_2$ eingestellt. Die spektrale Abhängigkeit der optischen Wegdifferenz entsteht durch alle optisch dispersiven Elemente, die beide Messlichtbündel $M_1$ bzw. $M_2$ auf ihrem Weg zwischen Austritt und Wiedereintritt in die Lichtleitfaser 10 durchlaufen, wie z. B. die Fokussieroptik 40, aber auch das Trägermaterial 24 und die Abstandsschicht 23 des Referenzstrahlteilers 20. Die Abstandsschicht 23 wird jedoch auch vom Referenzlichtbündel $R_1$ durchquert, sodass es für die Einstellung des Dispersionsunterschieds zwischen den Referenzlichtbündeln $R_1$ und $R_2$ nicht relevant ist.

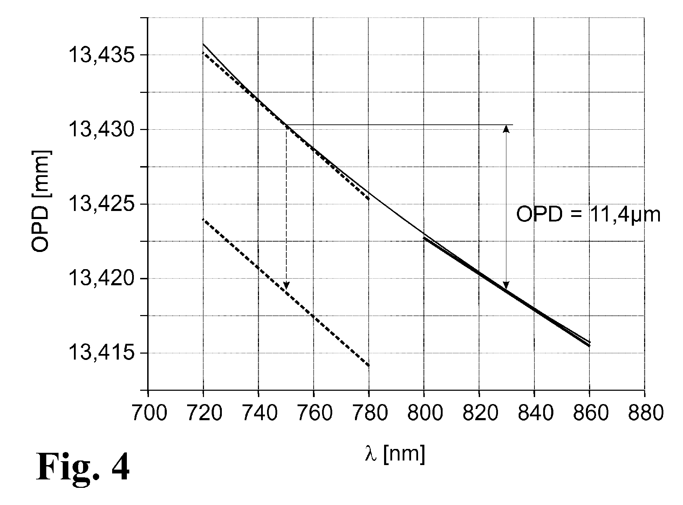

Die Anpassung der Dicke der Abstandsschicht 23 soll nachfolgend, unter Verwendung der vorstehend beispielhaft beschriebenen Spektralbereiche, anhand des in Fig. 4 dargestellten Diagramms erläutert werden. Zwischen dem Messlichtbündel $M_1$ mit dem kurzwelligeren Spektralbereich (mit der Zentralwellenlänge $\lambda_1$ von 750 nm) und dem Messlichtbündel $M_2$ mit dem langwelligeren Spektralbereich (mit der Zentralwellenlänge $\lambda_2$ von 830 nm) entsteht beim Durchlaufen der dispersiven Elemente (der Fokussieroptik 40) sowohl auf dem Hinweg zwischen Referenzstrahlteiler 20 und Objektoberfläche 60 als auch auf dem Rückweg eine optische Wegdifferenz von jeweils ca. 12 $\mu$m. Bei einer im Beispiel angenommenen Brechzahl n = 1,5 der Abstandsschicht 23 ist eine Dicke von 8 $\mu$m erforderlich, um die Wegdifferenz der Messlichtbündel $M_1$ bzw. $M_2$ gegenüber den am Referenzstrahlteiler 20 teilreflektierten Referenzlichtbündeln $R_1$ bzw. $R_2$ zu kompensieren. Diese Dicke ergibt sich aus dem Quotienten aus einfacher optischer Weglängendifferenz und Brechzahl n der Abstandsschicht 23. Im Diagramm ist der Reflexionsbereich des Interferenzfilters 22 für den langwelligen Spektralbereich mit einem durchgängigen, dicken Linienabschnitt und der des um die Dicke der Abstandsschicht 23 verschobenen Interferenzfilters 21 für den kurzwelligen Spektralbereich mit einem unterbrochenen, dicken Linienabschnitt dargestellt. Durch diese Kompensation der optischen Wegdifferenz kann eine Weißlichtinterferenz für zwei unterschiedliche Spektralbereiche gleichzeitig erzeugt werden. Als Material für die Abstandsschicht 23 kann jedes optisch transparente Medium verwendet werden, das sich in der erforderlichen Schichtdicke aufbringen lässt und eine zu den im Lichtweg 30 der Messlichtbündel $M_1$ und $M_2$ vorhandenen dispersiven Elementen vergleichbare Brechzahl n aufweist.

Nach der Vereinzelung weisen die einzelnen Referenzstrahlteiler 20 eine den Größenverhältnissen der Lichtleitfaser 10 oder anderer strahlzuführender optischer Elemente angepasste Größe auf.

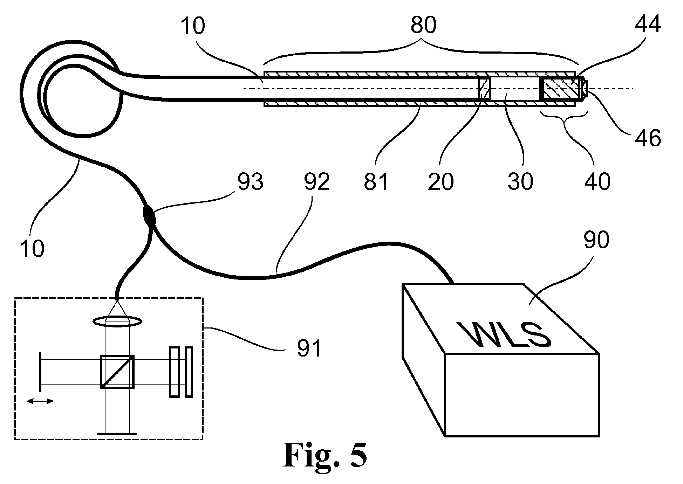

Eine für die Interferenzmessung mit der erfindungsgemäßen Mikrosonde 80 bevorzugt verwendete Messanordnung ist in Fig. 5 dargestellt.

Die Anordnung zur Weißlicht-Interferometrie weist gemäß Fig. 5 ein Interferometer 91 und die Mikrosonde 80 auf. Die Mikrosonde 80 ist über die Lichtleitfaser 10 mit dem Interferometer 91 verbunden. Eine Weißlichtquelle 90 (WLS = White Light Source) mit einer Lichteinkoppelfaser 92 ist über eine Faserweiche 93 mit der Lichtleitfaser 10 verbunden. Die Mikrosonde 80 besteht aus einem Gehäuse 81, das in der Reihenfolge der optischen Wirkung das Ende der Lichtleitfaser 10, den Referenzstrahlteiler 20, den Lichtweg 30 und die Fokussieroptik 40 (mit der GRIN-Linse 44 und der Plankonvex-Linse 46) aufnimmt.

Ein von der Weißlichtquelle 90 erzeugtes Licht 12 im Weißlichtspektrum oder Licht 12 mit mindestens zwei verschiedenen Spektralbereichen mit den Zentralwellenlängen $\lambda_1$, $\lambda_2$, ... wird mit der Lichteinkoppelfaser 92 über die Faserweiche 93 in die Lichtleitfaser 10 eingestrahlt. Die Faserweiche 93 kann über eine Spleißverbindung hergestellt werden. Das Licht 12 verlässt in der Mikrosonde 80 die Lichtleitfaser 10 und durchläuft den Referenzstrahlteiler 20. Durch den Referenzstrahlteiler 20 wird ein kleiner Teil des Lichts 12 in die Lichtleitfaser 10 zurück bis in das Interferometer 91 reflektiert. Diese teilreflektierten Strahlanteile bilden die Referenzlichtbündel $R_1$, $R_2$, .... Der nicht reflektierte größere Teil bildet die Messlichtbündel $M_1$, $M_2$, ....

Die Messlichtbündel $M_1$, $M_2$, ... divergieren im Lichtweg 30 mit der numerischen Apertur der Lichtleitfaser 10 auf die maximal nutzbare Apertur der Fokussieroptik 40. Dementsprechend ist die Länge des Lichtwegs 30 ausgelegt. Anschließend werden die Messlichtbündel $M_1$, $M_2$, ... von der Fokussieroptik 40 auf die Objektoberfläche 60 fokussiert. Auf der Objektoberfläche 60 erfolgt eine Reflexion eines Anteils der Messlichtbündel $M_1$, $M_2$, ... zurück durch die Fokussieroptik 40, den Lichtweg 30, den Referenzstrahlteiler 20 und mit Einkopplung in die Lichtleitfaser 10 bis in das Interferometer 91.

Aufgrund der unterschiedlichen Spektralbereiche entsteht im Gegensatz zu den Referenzlichtbündeln $R_1$, $R_2$, ... beim Durchtritt der Messlichtbündel $M_1$, $M_2$, ... durch eine nicht chromatisch korrigierte Fokussieroptik 40 eine optische Wegdifferenz zwischen den Messlichtbündeln $M_1$, $M_2$, .... Um diese optische Wegdifferenz zu kompensieren und eine gleichzeitige Messung, mit aus mindestens zwei unterschiedlichen Spektralbereichen bestehenden Licht 12 mit den Zentralwellenlängen $\lambda_1$, $\lambda_2$, ... durchführen zu können, ist der Referenzstrahlteiler 20 vorgesehen. Der Referenzstrahlteiler 20 sichert dabei, dass die optische Wegdifferenz, welche die spektral unterschiedlichen Messlichtbündel $M_1$, $M_2$, ... in der Fokussieroptik 40 (oder anderen dispersiven optischen Komponenten) erleiden, für die Referenzlichtbündeln $R_1$, $R_2$, ... in gleicher Größe eingestellt werden, damit die im Interferometer 91 zu messenden Wegunterschiede nicht infolge der optischen Wegdifferenz verfälscht werden.

Der Referenzstrahlteiler 20 kann direkt auf der Lichtaustrittsfläche 11 der Lichtleitfaser 10 aufgebracht werden oder auf dem separaten Trägermaterial 24 aufgebracht und anschließend mit der dem Trägermaterial 24 gegenüberliegenden Seite mit der Lichtaustrittsfläche 11 der Lichtleitfaser 10 verbunden werden. Vorzugsweise geschieht letzteres durch Aufkleben (d. h. optisches Kitten). Es ist aber auch möglich, den Referenzstrahlteiler 20 separat zwischen der Lichtaustrittsfläche 11 der Lichtleitfaser 10 und der Fokussieroptik 40 anzuordnen.

Besonders bei der Weißlicht-Interferometrie muss in den Messlichtbündeln $M_1$, $M_2$, ... eine korrigierende Optik zur Unterdrückung der in der Fokussieroptik 40 auftretenden störenden chromatischen Längsaberration vorgesehen werden. Im Fall der Verwendung der GRIN-Linse 44 kann das eine direkt an der Fokussieroptik 40 angebrachte diffraktive Optik 45 sein.

Zur Kompensation kann auch ein Achromat 47 aus einer refraktiven Sammellinse und einer Zerstreuungslinse oder ein Apochromat aus zwei refraktiven Sammellinsen und einer Zerstreuungslinse aus Gläsern unterschiedlicher Dispersion als Fokussieroptik 40 verwendet werden.

Zur genauen Vermessung der Objektoberfläche 60 mit stark angewinkelten oder spiegelnden Oberflächenteilen sollte die Mikrosonde 80 objektseitig eine möglichst hohe numerische Apertur aufweisen. Dazu kann die Fokussieroptik 40 noch durch eine zusätzliche objektseitige Plankonvex-Linse 46 ergänzt werden, die mit ihrer Planseite den objektseitigen Abschluss der Mikrosonde 80 bildet. Die objektseitige numerische Apertur der Fokussieroptik 40 (und somit der Mikrosonde 80) kann so auf Werte von 0,55 < NA < 0,85 gesteigert werden.

Im Interferometer 91 werden die reflektierten Messlichtbündel $M_1$, $M_2$, ... und die Referenzlichtbündeln $R_1$, $R_2$, ... gleichzeitig über die Teilarme des Interferometers 91 zur Interferenz gebracht. Aus der Überlagerung beider Interferenzsignale wird in gleicher Art und Weise, wie in der DE 10 2005 061 464 A1 beschrieben, ein hochauflösendes Messsignal erzeugt, mit dem kleinste absolute Abstandsänderungen zwischen der Mikrosonde 80 und der Objektoberfläche 60 erfasst werden können.

Bezugszeichenliste

| | |
|---|---|
| 10 | Lichtleitfaser |
| 11 | Lichtaustrittsfläche |
| 12 | Licht (breitbandig) |
| 20 | Referenzstrahlteiler |
| 21 | Interferenzfilter (für den kurzwelligeren Spektralbereich) |
| 22 | Interferenzfilter (für den langwelligeren Spektralbereich) |
| 23 | Abstandsschicht |
| 24 | Trägermaterial |
| 30 | Lichtweg |
| 40 | Fokussieroptik |
| 41 | fiktive Fokussieroptik (mit für den langwelligeren Spektralbereich wirksamer Brechzahl) |
| 42 | fiktive Fokussieroptik (mit für den kurzwelligeren Spektralbereich wirksamer Brechzahl) |
| 44 | GRIN-Linse |
| 45 | diffraktive Optik |
| 46 | Plankonvex-Linse |
| 47 | Achromat |
| 50 | Messabstand |
| 60 | Objektoberfläche |
| 61 | Messfleck |
| $\lambda_1$ | Zentralwellenlänge eines kurzwelligeren Spektralbereichs |
| $\lambda_2$ | Zentralwellenlänge eines langwelligeren Spektralbereichs |
| $R_1$ | Referenzlichtbündel des kurzwelligeren Spektralbereichs |
| $R_2$ | Referenzlichtbündel des langwelligeren Spektralbereichs |
| $M_1$ | Messlichtbündel des kurzwelligeren Spektralbereichs |
| $M_2$ | Messlichtbündel des langwelligeren Spektralbereichs |
| 80 | Mikrosonde |
| 81 | Gehäuse |
| 90 | Weißlichtquelle |
| 91 | Interferometer |
| 92 | Lichteinkoppelfaser |
| 93 | Faserweiche |

Patentansprüche

1. Optische Mikrosonde für interferometrische Messungen, bei denen ein kurzkohärentes Lichtbündel Weißlicht oder mindestens zwei verschiedene Spektralbereiche aufweist, enthaltend:

    - eine das Lichtbündel übertragende Lichtleitfaser mit einer in die Mikrosonde einmündenden Lichtaustrittsfläche,
    - eine Fokussieroptik zur Fokussierung des Lichtbündels auf die Objektoberfläche,
- einen an die Lichtaustrittsfläche der Lichtleitfaser anschließenden Lichtweg zur Erzeugung divergierenden Lichts zur Ausnutzung der Apertur der Fokussieroptik,

wobei ein Messlichtbündel von der Lichtaustrittsfläche der Fokussieroptik zur Objektoberfläche und von dieser zurück durch die Mikrosonde in die Lichtleitfaser und ein an einem Referenzstrahlteiler durch Teilreflexion erzeugtes Referenzlichtbündel in die Lichtleitfaser zurückreflektiert werden, **dadurch gekennzeichnet, dass**

- der Referenzstrahlteiler (20) mit mindestens in zwei unterschiedlichen Spektralbereichen teilreflektierenden Filtern (21, 22) zur Erzeugung mindestens zweier transmittierter Messlichtbündel ($M_1$, $M_2$) und zugehöriger reflektierter Referenzlichtbündel ($R_1$, $R_2$) aus jeweils einander nicht überlappenden Spektralbereichen zwischen der Lichtaustrittsfläche (11) der Lichtleitfaser (10) und der Fokussieroptik (40) angeordnet ist, wobei ein axialer Abstand zwischen jeweils zwei teilreflektierenden Filtern (21, 22) so eingestellt ist, dass eine spektral bedingte optische Wegdifferenz, die die jeweiligen Messlichtbündel ($M_1$, $M_2$) beim Durchlaufen dispersiver Elemente im Lichtweg (30) zur Objektoberfläche (60) und zurück erleiden, in gleicher Größe zwischen den jeweiligen Referenzlichtbündeln ($R_1$, $R_2$) vorhanden ist, sodass bei der Überlagerung der Messlichtbündel ($M_1$, $M_2$) und der zugehörigen Referenzlichtbündel ($R_1$, $R_2$) die dispersionsbedingte Wegdifferenz kompensiert ist, und
- die Fokussieroptik (40) eine so geringe chromatische Aberration aufweist, dass sich Fokusse der spektral unterschiedlichen Messlichtbündel mindestens in einem gewünschten Messbereich für die Objektoberfläche wenigstens teilweise überlappen.

2. Optische Mikrosonde nach Anspruch 1, **dadurch gekennzeichnet, dass** der Referenzstrahlteiler (20) einen Schichtaufbau aus mindestens zwei an die Spektralbereiche der spektral separierten Mess- und Referenzlichtbündel ($M_1$, $M_2$, $R_1$, $R_2$) angepassten teilreflektierenden Filtern und jeweils einer die teilreflektierenden Filter axial separierenden transparenten Abstandsschicht (23) aufweist, wobei die dispersionskompensierende Wirkung gegenüber den Messlichtbündeln ($M_1$, $M_2$) durch Anpassung der Schichtdicke und der Brechzahl der Abstandsschicht (23) einstellbar ist.

3. Optische Mikrosonde nach Anspruch 2, **dadurch gekennzeichnet, dass** die teilreflektierenden Filter als Interferenzfilter (21, 22) mit steiler Kantenfilterfunktion zum Erzeugen spektral nicht überlappender Mess- und Referenzlichtbündel ($M_1$, $M_2$, $R_1$, $R_2$) ausgebildet sind.

4. Optische Mikrosonde nach Anspruch 2, **dadurch gekennzeichnet, dass** die teilreflektierenden Filter als spezielle Farbfilter zum Erzeugen spektral separierter Mess- und Referenzlichtbündel ($M_1$, $M_2$, $R_1$, $R_2$) ausgebildet sind, wobei aufgrund einer weniger steilen Kantenfilterfunktion der Farbfilter die Lichtquelle spektral separierte Spektralbereiche zur Erzeugung spektral nicht überlappender Messlichtbündel ($M_1$, $M_2$) und Referenzlichtbündel ($R_1$, $R_2$) aufweist.

5. Optische Mikrosonde nach Anspruch 1, **dadurch gekennzeichnet, dass** der Referenzstrahlteiler (20) eine Vielzahl teilreflektierender Filter in einem ineinander übergehenden Filterschichtsystem aufweist, wobei Schichten des Filterschichtsystems in Dicke und Brechzahl so gewählt sind, dass separate Abstandsschichten (23) entfallen und somit eine quasi-kontinuierliche Dispersionskompensation erreichbar ist.

6. Optische Mikrosonde nach Anspruch 1, **dadurch gekennzeichnet, dass** der Referenzstrahlteiler (20) auf einer der Lichtaustrittsfläche (11) der Lichtleitfaser (10) gegenüberliegend angeordneten Oberfläche eines transparenten Trägermaterials (24) aufgebracht ist.

7. Optische Mikrosonde nach Anspruch 1, **dadurch gekennzeichnet, dass** der Referenzstrahlteiler (20) direkt auf die Lichtaustrittsfläche (11) der Lichtleitfaser (10) aufgebracht ist.

8. Optische Mikrosonde nach Anspruch 1, **dadurch gekennzeichnet, dass** die Fokussieroptik (40) aus einer herkömmlichen refraktiven Optik und einer diffraktiven Optik (45) zur Korrektur der chromatischen Aberration zusammengesetzt ist.

9. Optische Mikrosonde nach Anspruch 1, **dadurch gekennzeichnet, dass** die Fokussieroptik (40) eine GRIN-Linse (44) enthält, die mit einer diffraktiven Optik (45) zur Korrektur der chromatischen Aberration kombiniert ist.

10. Optische Mikrosonde nach Anspruch 9, **dadurch gekennzeichnet, dass** die Fokussieroptik (40) eine GRIN-Linse (44) sowie eine refraktive Optik zur Erhöhung der objektseitigen numerischen Apertur enthält und mit einer diffraktiven Optik (45) zur Korrektur der chromatischen Aberration kombiniert ist.

11. Optische Mikrosonde nach Anspruch 1, **dadurch gekennzeichnet, dass** die Fokussieroptik (40) eine diffraktive Optik (45) zur Korrektur der chromatischen Aberration aufweist, die als Schichtsystem auf eine optische Oberfläche der Fokussieroptik (40) aufgebracht ist.

12. Optische Mikrosonde nach Anspruch 1, **dadurch gekennzeichnet, dass** die Fokussieroptik (40) zur Korrektur der chromatischen Aberration als Achromat (47) ausgebildet ist.

13. Anordnung zur Weißlicht-Interferometrie mit einem Interferometer, einer Lichtquelle mit Weißlichtspektrum oder mindestens zwei verschiedenen Spektralbereichen sowie einer Lichtleitfaser zum Übertragen des Lichtquellenlichts auf eine zu vermessende Objektoberfläche und zurückreflektierten Lichts in das Interferometer unter Verwendung einer Mikrosonde nach einem der Ansprüche 1 bis 12 zum Anmessen der Objektoberfläche.

14. Verwendung einer Mikrosonde nach einem der Ansprüche 1 bis 12 in einer Anordnung gemäß Anspruch 13 zur Kohärenztomographie, bei der infolge der Kompensation der dispersionsbedingten Wegdifferenz und der Korrektur der chromatischen Aberration bei der Kohärenztomographie eine absolute interferometrische Weglängenmessung im Nanometerbereich auch für stark geneigte Messflächen bei Grundabständen zwischen Mikrosonde und Messobjekt von einigen hundert Mikrometern erreicht wird.

15. Verfahren zur Herstellung eines dispersionskompensierenden Referenzstrahlteilers für eine Mikrosonde für interferometrische Messungen, der ein Lichtbündel in mindestens zwei reflektierte Referenzlichtbündel ($R_1$, $R_2$) und zugehörige transmittierte Messlichtbündel ($M_1$, $M_2$) aus unterschiedlichen Spektralbereichen aufteilt, mit den Schritten:

a) Aufbringen eines ersten Wechselschichtsystems, das ein strahlteilendes Interferenzfilter (21) zur Erzeugung eines ersten Mess- und eines ersten Referenzstrahles ($M_1$; $R_1$) aus einem kurzwelligeren Spektralanteil des Lichtbündels bildet, auf ein transparentes Trägermaterial (24) mit feinoptischer Oberflächenqualität,

b) Aufbringen einer transparenten Abstandsschicht (23) in einer vorbestimmten Schichtdicke, die in Abhängigkeit von einer optischen Wegdifferenz, welche die spektral unterschiedlichen Messlichtbündel ($M_1$; $M_2$) beim Durchlaufen dispersiver Elemente im Lichtweg (30) bis zu einer Objektoberfläche (60) und zurück gegenüber den jeweils zugehörigen Referenzlichtbündeln ($R_1$; $R_2$) erleiden, zur Kompensation dieser Wegdifferenz angepasst ist,

c) Aufbringen eines zweiten Wechselschichtsystems, das ein strahlteilendes Interferenzfilter (22) zur Erzeugung eines zweiten Mess- und eines zweiten Referenzstrahles ($M_2$; $R_2$) aus einem langwelligeren Spektralanteil des Lichtbündels bildet, auf die Abstandsschicht (23) und

d) Trennen des Trägermaterials (24) mit dem aufgebrachten Schichtenaufbau aus Interferenzfilter (21), Abstandsschicht (23) und Interferenzfilter (22) in einzelne Referenzstrahlteiler (20).

**Claims**

1. Optical microprobe for interferometric measurements in which a short-coherent light bundle has white light or at least two different spectral ranges, comprising:

- a light-conducting fiber which transmits the light bundle and has a light output surface opening into the microprobe,
- focusing optics for focusing the light bundle on the object surface,
- a light path adjoining the light output surface of the light-conducting fiber for generating divergent light for exploiting the aperture of the focusing optics,

wherein a measurement light bundle is reflected from the light output surface of the focusing optics to the object surface and from the object surface back through the microprobe into the light-conducting fiber and a reference light bundle generated by partial reflection at a reference beam splitter is reflected back into the light-conducting fiber, **characterized in that**

- the reference beam splitter (20) having filters (21, 22) which are partially reflecting in at least two different spectral ranges for generating at least two transmitted measurement light bundles ($M_1$, $M_2$) and associated reflected reference light bundles ($R_1$, $R_2$) of non-overlapping spectral ranges is arranged between the light output surface (11) of the light-conducting fiber (10) and the focusing optics (40), wherein an axial distance between two partially reflecting filters (21, 22) is adjusted in such a way that a spectrally induced optical path difference to which the respective measurement light bundles ($M_1$, $M_2$) are subjected when passing through dispersive elements in the light path (30) to the object surface (60) and back is present in the same magnitude between the respective reference light bundles ($R_1$, $R_2$), so that the dispersion-induced path difference is compensated when the measurement light bundles ($M_1$, $M_2$) and the associ-

ated reference light bundles ($R_1$, $R_2$) are superposed, and

- the focusing optics (40) has such a slight chromatic aberration that foci of the spectrally different measurement light bundles at least partially overlap at least in a desired measurement range for the object surface.

2. Optical microprobe according to claim 1, **characterized in that** the reference beamsplitter (20) has a layer construction comprising at least two partially reflecting filters adapted to the spectral ranges of the spectrally separated measurement light bundles and reference light bundles ($M_1$, $M_2$, $R_1$, $R_2$) and, in each instance, a transparent spacer layer (23) which axially separates the partially reflecting filters, wherein the dispersion-compensating effect with respect to the measurement light bundles ($M_1$, $M_2$) can be adjusted by adapting the layer thickness and the refractive index of the spacer layer (23).

3. Optical microprobe according to claim 2, **characterized in that** the partially reflecting filters are formed as interference filters (21, 22) with a sharp cut-off filter characteristic for generating measurement light bundles and reference light bundles ($M_1$, $M_2$, $R_1$, $R_2$) with no spectral overlapping.

4. Optical microprobe according to claim 2, **characterized in that** the partially reflecting filters are formed as special colour filters for generating spectrally separated measurement light bundles and reference light bundles ($M_1$, $M_2$, $R_1$, $R_2$), wherein, owing to a reduced steepness of the cut-off filter characteristic of the colour filters, the light source has spectrally separated spectral ranges for generating measurement light bundles ($M_1$, $M_2$) and reference light bundles ($R_1$, $R_2$) with no spectral overlapping.

5. Optical microprobe according to claim 1, **characterized in that** the reference beam splitter (20) has a plurality of partially reflecting filters in a filter layer system of filter layers passing into one another, wherein layers of the filter layer system are so selected with respect to thickness and refractive index that separate spacer layers (23) are omitted and a quasi-continuous dispersion compensation can accordingly be achieved.

6. Optical microprobe according to claim 1, **characterized in that** the reference beam splitter (20) is arranged on a surface of a transparent support material (24), which surface is arranged opposite the light output surface (11) of the light-conducting fiber (10).

7. Optical microprobe according to claim 1, **characterized in that** the reference beam splitter (20) is arranged directly on the light output surface (11) of the light-conducting fiber (10).

8. Optical microprobe according to claim 1, **characterized in that** the focusing optics (40) comprise conventional refractive optics and diffractive optics (45) for correcting the chromatic aberration.

9. Optical microprobe according to claim 1, **characterized in that** the focusing optics (40) comprise a GRIN lens (44) which is combined with diffractive optics (45) for correcting the chromatic aberration.

10. Optical microprobe according to claim 9, **characterized in that** the focusing optics (40) comprise a GRIN lens (44) and refractive optics for increasing the object-side numerical aperture and are combined with diffractive optics (45) for correcting the chromatic aberration.

11. Optical microprobe according to claim 1, **characterized in that** the focusing optics (40) have diffractive optics (45) for correcting the chromatic aberration which are arranged as layer system on an optical surface of the focusing optics (40).

12. Optical microprobe according to claim 1, **characterized in that** the focusing optics (40) are formed as an achromat (47) for correcting the chromatic aberration.

13. Arrangement for white light interferometry with an interferometer, a light source with white light spectrum or at least two different spectral ranges, and a light-conducting fiber for transmitting the light source light to an object surface to be measured and light reflected back into the interferometer by using a microprobe according to one of claims 1 to 12 for measuring the object surface.

14. Use of a microprobe according to one of claims 1 to 12 in an arrangement according to claim 13 for coherence tomography in which, as a result of the compensation of the dispersion-induced path difference and the correction of the chromatic aberration in coherence tomography, an absolute interferometric path length measurement is achieved in nanometer range also for sharply inclined measurement surfaces at base distances between the microprobe and measurement object of several hundreds of micrometers.

15. Method for producing a dispersion-compensating reference beam splitter for a microprobe for interferometric measurements which splits a light bundle into at least two reflected reference light bundles ($R_1$, $R_2$) und associated transmitted measurement light bundles ($M_1$, $M_2$) of different spectral ranges, with the steps:

a) arranging a first alternating layer system, that forms a beam-splitting interference filter (21) for generating a first measurement beam and a first reference beam ($M_1$; $R_1$) of a shorter-wavelength spectral component of the light bundle, on a transparent support material (24) with precision-optical surface quality,

b) arranging a transparent spacer layer (23) having a predetermined layer thickness which, depending on an optical path difference to which the spectrally different measurement light bundles ($M_1$, $M_2$) are subjected when passing through dispersive elements in the light path (30) to the object surface (60) and back with respect to the respective associated reference light bundles ($R_1$, $R_2$), is adapted for compensating said path difference,

c) arranging a second alternating layer system, that forms a beam-splitting interference filter (22) for generating a second measurement beam and a second reference beam ($R_2$; $M_2$) of a shorter-wavelength spectral component of the light bundle, on the spacer layer (23), and

d) separating the support material (24) with the layer construction comprising interference filter (21), spacer layer (23) and interference filter (22) arranged thereon into individual reference beam splitters (20).

**Revendications**

1. Microsonde optique pour mesures interférométriques dans lesquelles un faisceau lumineux à cohérence courte a une lumière blanche ou au moins deux domaines spectraux différents, comprenant:

- une fibre optique qui transmet le faisceau lumineux et a une surface de sortie de lumière débouchant dans la microsonde,
- une optique de focalisation pour focaliser le faisceau lumineux sur la surface d'objet,
- un trajet lumineux qui se raccorde à la surface de sortie de lumière de la fibre optique pour générer une lumière divergente pour exploiter l'ouverture de l'optique de focalisation,

dans laquelle un faisceau lumineux de mesure est réfléchit par la surface de sortie de lumière de l'optique de focalisation vers la surface d'objet et par ladite surface d'objet en retour à travers la microsonde dans la fibre optique, et un faisceau lumineux de référence qui est généré par réflexion partielle sur un diviseur de faisceau de référence est réfléchit en retour dans la fibre optique, **caractérisée en ce que**

- le diviseur de faisceau de référence (20) ayant des filtres (21, 22) partiellement réfléchissants dans au moins deux domaines spectraux différents pour générer au moins deux faisceaux lumineux de mesure ($M_1$, $M_2$) transmis et faisceaux lumineux de référence ($R_1$, $R_2$) réfléchis associés de domaines spectraux non chevauchants est disposé entre la surface de sortie de lumière (11) de la fibre optique (10) et l'optique de focalisation (40), une distance axiale entre deux filtres (21, 22) partiellement réfléchissants étant ajustée de telle façon qu'une différence de trajet optique due aux longueurs d'onde différentes, à laquelle sont soumis les faisceaux lumineux de mesure ($M_1$, $M_2$) respectifs quand ils passent par des éléments dispersifs dans le trajet lumineux (30) vers la surface d'objet (60) et en retour, est présente de même ampleur entre les faisceaux lumineux de référence ($R_1$, $R_2$) respectifs de telle manière que la différence de trajet due à la dispersion est compensée quand les faisceaux lumineux de mesure ($M_1$, $M_2$) et les faisceaux lumineux de référence ($R_1$, $R_2$) associés sont superposés, et

- l'optique de focalisation (40) a une aberration chromatique si faible que des foyers des faisceaux lumineux de mesure spectralement différents chevauchent au moins partiellement au moins dans une plage de mesure désirée pour la surface d'objet.

2. Microsonde optique selon la revendication 1, **caractérisée en ce que** le diviseur de faisceau de référence (20) a une structure de couches comprenant au moins deux filtres partiellement réfléchissants adaptés aux domaines spectraux des faisceaux lumineux de mesure et faisceaux lumineux de référence spectralement séparés ($M_1$, $M_2$, $R_1$, $R_2$) et, dans chaque cas, une couche d'espacement (23) transparente qui sépare axialement les filtres partiellement réfléchissants, l'effet de compensation de dispersion par rapport aux faisceaux lumineux de mesure ($M_1$, $M_2$) étant ajustable par une adaptation de l'épaisseur de couche et de l'indice de réfraction de la couche d'espacement (23).

3. Microsonde optique selon la revendication 2, **caractérisée en ce que** les filtres partiellement réfléchissants sont sous la forme de filtres interférentiels (21, 22) avec une caractéristique de filtre à arêtes raide pour générer des faisceaux lumineux de mesure et des faisceaux lumineux de référence ($M_1$, $M_2$, $R_1$, $R_2$) sans chevauchement spectral.

4. Microsonde optique selon la revendication 2, **caractérisée en ce que** les filtres partiellement réfléchissants sont sous la forme de filtres de couleur spéciaux pour générer des faisceaux lumineux de mesure et des faisceaux lumineux de référence ($M_1$,

$M_2$, $R_1$, $R_2$) spectralement séparés, dans laquelle, due à une raideur réduite de la caractéristique de filtre à arêtes des filtres de couleur, la source de lumière a des domaines spectraux spectralement séparés pour générer des faisceaux lumineux de mesure ($M_1$, $M_2$) et des faisceaux lumineux de référence ($R_1$, $R_2$) sans chevauchement spectral.

5. Microsonde optique selon la revendication 1, **caractérisée en ce que** le diviseur de faisceau de référence (20) a une pluralité de filtres partiellement réfléchissants dans un système de couches de filtre composé de couches de filtre qui passent l'un dans l'autre, des couches du système de couches de filtres étant sélectionnées à leur épaisseur et indice de réfraction de telle façon que des couches d'espacement (23) séparées sont omises et, par conséquent, une compensation de dispersion quasi-continue peut être obtenue.

6. Microsonde optique selon la revendication 1, **caractérisée en ce que** le diviseur de faisceau de référence (20) est disposé sur une surface d'un matériau de support (24) transparent, ladite surface étant disposée à l'opposé de la surface de sortie de lumière (11) de la fibre optique (10).

7. Microsonde optique selon la revendication 1, **caractérisée en ce que** le diviseur de faisceau de référence (20) est disposé directement sur la surface de sortie de lumière (11) de la fibre optique (10).

8. Microsonde optique selon la revendication 1, **caractérisée en ce que** l'optique de focalisation (40) comprend une optique réfractive conventionnelle et une optique diffractive (45) pour corriger l'aberration chromatique.

9. Microsonde optique selon la revendication 1, **caractérisée en ce que** l'optique de focalisation (40) comprend une lentille GRIN (44) qui est combinée à une optique diffractive (45) pour corriger l'aberration chromatique.

10. Microsonde optique selon la revendication 9, **caractérisée en ce que** l'optique de focalisation (40) comprend une lentille GRIN (44) et une optique réfractive pour augmenter l'ouverture numérique du côté de l'objet et est combinée à une optique diffractive (45) pour corriger l'aberration chromatique.

11. Microsonde optique selon la revendication 1, **caractérisée en ce que** l'optique de focalisation (40) a une optique diffractive (45) pour corriger l'aberration chromatique qui est disposée en tant que système de couches sur une surface optique de l'optique de focalisation (40).

12. Microsonde optique selon la revendication 1, **caractérisée en ce que** l'optique de focalisation (40) est sous forme d'un achromat (47) pour corriger l'aberration chromatique.

13. Agencement pour interférométrie de lumière blanche ayant un interféromètre, une source de lumière avec un spectre de lumière blanche ou au moins deux domaines spectraux différents, et une fibre optique pour transmettre la lumière de la source de lumière à une surface d'objet à mesurer et la lumière réfléchie en retour dans l'interféromètre en utilisant une microsonde selon une des revendications 1 à 12 pour mesurer la surface d'objet.

14. Utilisation d'une microsonde selon une des revendications 1 à 12 dans un agencement selon la revendication 13 pour la tomographie de cohérence dans laquelle, résultant de la compensation de la différence de trajet due à la dispersion et de la correction de l'aberration chromatique dans la tomographie de cohérence, une mesure interférométrique absolue de la longueur de trajet est réalisée dans la plage nanomètrique même pour des surfaces de mesure fortement inclinées à des distances de travail entre la microsonde et l'objet de mesure de quelques centaines de micromètres.

15. Procédé de production d'un diviseur de faisceau de référence compensant la dispersion pour une microsonde pour mesures interférométriques qui divise un faisceau lumineux en au moins deux faisceaux lumineux de référence ($R_1$, $R_2$) réfléchis et faisceaux lumineux de mesure ($M_1$, $M_2$) transmis associés de domaines spectraux différents, comprenant les étapes:

a) disposer un premier système de couches alternant, qui forme un filtre d'interférence (21) divisant des faisceaux pour générer un premier faisceau de mesure et un premier faisceau de référence ($M_1$; $R_1$) d'une composante spectrale de longueur d'onde plus courte du faisceau lumineux, sur un matériau de support (24) transparent avec une qualité de surface optique de précision,
b) disposer une couche d'espacement (23) transparente à une épaisseur de couche prédéterminée qui, en fonction d'une différence de trajet optique à laquelle sont soumis les faisceaux lumineux de mesure ($M_1$; $M_2$) spectralement différents quand ils passent par des éléments dispersifs dans le trajet lumineux (30) jusqu'à une surface d'objet (60) et en retour par rapport aux faisceaux lumineux de référence ($R_1$; $R_2$) associés respectifs, est adaptée pour compenser cette différence de trajet,
c) disposer un deuxième système de couches alternant, qui forme un filtre d'interférence (22) divisant des faisceaux pour générer un deuxième faisceau de mesure et un deuxième faisceau de référence ($M_2$; $R_2$) d'une composante spectrale de longueur d'onde plus courte du faisceau lumineux, sur la couche d'espacement (23), et

d) séparer le matériau de support (24) avec la structure de couches disposée sur ceci comprenant filtre d'interférence (21), couche d'espacement (23) et filtre d'interférence (22) en diviseurs de faisceau de référence individuels (20).

**Fig. 1**

# Fig. 2a

# Fig. 2b

# Fig. 3

**Fig. 4**

**Fig. 5**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007039556 B3
- DE 102010022421
- US 20050174664 A
- DE 102005061464 A1

**In der Beschreibung aufgeführte Nicht-Patentliteratur**

- *APPLIED OPTICS,* vol. 46 (17